# EUROPÄISCHE PATENTSCHRIFT

(11) **EP 2 505 804 B1**
(45) Veröffentlichungstag und Bekanntmachung des Hinweises auf die Patenterteilung: **09.09.2015**
(21) Anmeldenummer: 12155493.5
(22) Anmeldetag: 15.02.2012
(51) Int. Cl.: F01N 3/20

(54) **Dosiersystem für ein flüssiges Medium, insbesondere eine Harnstoff-Wasser-Lösung**
Metering system for a fluid medium, in particular urea-water solution
Système de dosage pour un milieu liquide, notamment une solution urée-eau

(30) Priorität: 28.03.2011 DE 102011006187
(43) Veröffentlichungstag der Anmeldung: 03.10.2012
(73) Patentinhaber: Robert Bosch GmbH, 70442 Stuttgart (DE)
(72) Erfinder: Burger, Matthias, 71711 Murr (DE); Trompeter, Franz-Josef, 71691 Freiberg Am Neckar (DE)

(56) Entgegenhaltungen:
- EP-A1- 1 373 731
- EP-A1- 2 157 295
- WO-A1-02/27160
- DE-A1-102006 012 855

## Beschreibung

### Stand der Technik

Die Immissionsgrenzwerte für Stickoxide erfordern vor allem bei schweren Kraftfahrzeugen Abgasnachbehandlungseinrichtungen, die eine selektive katalytische Reduktion (SCR) der in den Rohemissionen der Brennkraftmaschine enthaltenen Stickoxide vornehmen. Dieses sogenannte SCR-Verfahren zur Abgasreinigung ist aus dem Stand der Technik bekannt, sodass auf eine detaillierte Erläuterung der bei diesem Verfahren ablaufenden chemischen Vorgänge verzichtet werden kann.

Ein Beispiel einer solchen Abgasnachbehandlungseinrichtung ist aus der DE 10 2006 012 855 A1 bekannt. Dort wird eine wässerige Harnstoff-Wasser-Lösung in einem Tank gespeichert und von einer Dosierpumpe und mit Hilfe eines Dosierventils bedarfsabhängig in ein Abgasrohr der Brennkraftmaschine eingedüst. Das aus der DE 10 2006 012 855 A1 bekannte Dosierventil ist druckbetätigt. Dies bedeutet, dass es öffnet, sobald an dem Eingang des Dosierventils ein vorgegebener Öffnungsdruck überschritten wird. Sobald der Öffnungsdruck unterschritten wird, schließt das Dosierventil wieder. Dieses druckbetätigte Dosierventil ist ein "passives" Bauteil, das keine eigene Ansteuerung erfordert. Daher sind keine Signalleitungen bzw. Steuerleitungen von einem Steuergerät zum Dosierventil erforderlich.

Aus der EP 1 373 731 B1 und der WO 02/27160 A1 sind Dosiersysteme mit Membranpumpen bekannt bei denen die Membran über einen Elektromotor und einen Exzenterantrieb betätigt wird.

Aus der DE 102008041410 A1 ist ein Dosiersystem mit einer Membranpumpe bekannt bei dem die Membran über einen Elektromagneten betätigt wird.

Bei den aus dem Stand der Technik bekannten Dosiersysteme mit einer elektrisch betätigten Membranpumpe wird die Membranpumpe benutzt, um die von einem Steuergerät vorgegebene Menge flüssigen Mediums in den Abgasstrang einzudüsen. Dies hat den Nachteil, dass die Zerstäubung des flüssigen Mediums nicht optimal ist; vor allem wenn kleine Mengen in die Abgaslage eingedüst werden,. In Folge dessen reduziert sich die Wirksamkeit des flüssigen Mediums. Des Weiteren ist bei diesen Systemen die Dosierstelle nicht zentrisch, sondern seitlich am Abgasrohr angeordnet, so dass in aller Regel ein Gasmischer erforderlich ist, um eine ausreichend homogene Verteilung der Harnstoff-Wasser-Lösung in dem Abgas zu gewährleisten.

Ein weiterer wichtiger Aspekt eines Dosiersystems ist die sogenannte Eisdruckfestigkeit, da Harnstoff-Wasser-Lösung bei Temperaturen unterhalb -11°C gefriert und dabei sein Volumen vergrößert. Dies kann zu Schäden am Dosiersystem führen.

### Offenbarung der Erfindung

Der Erfindung liegt die Aufgabe zugrunde, ein Dosiersystem bereitzustellen, das einfach aufgebaut ist, wenige Komponenten benötigt und noch dazu eine hervorragende Eisdruckfestigkeit aufweist.

Diese Aufgabe wird erfindungsgemäß gelöst durch ein Dosiersystem für ein flüssiges Medium, insbesondere einem flüssigen Reduktionsmittel, umfassend eine druckluftbetätigte Membranpumpe, ein 4/2-Wegeventil und einen Phasenmischer, wobei das 4/2-Wegeventil in einer ersten Schaltstellung eine erste Kammer der Membranpumpe mit einer Druckluftversorgung verbindet und in einer zweiten Schaltstellung einen ersten Eingang des Phasenmischers mit der Druckluftversorgung verbindet.

Das erfindungsgemäße Dosiersystem benötigt weder einen elektrischen Antrieb noch ein Dosierventil, wie das bei Dosiersystemen nach dem Stand der Technik der Fall ist. Dadurch reduzieren sich die Systemkosten erheblich. Die Zumessung der in den Abgasstrang einzudüsenden Harnstoff-Wasser-Lösung erfolgt erfindungsgemäß über das Zusammenspiel zwischen dem 4/2-Wegeventil und der Membranpumpe.

Ein weiterer Vorteil der erfindungsgemäßen druckluftbetriebenen Membranpumpe ist darin zu sehen, dass die Membrane nahezu zug- und druckspannungsfrei betrieben wird, weil auf beiden Seiten der Membrane der gleiche Druck vorherrscht und mit Ausnahme einer Rückstellfeder keine weitere mechanische Kraft an der Membrane angreift. Wegen dieser prinzipbedingten geringen mechanischen Beanspruchung der Membrane erhöht sich die Lebensdauer der erfindungsgemäßen Dosierpumpe erheblich.

Ein weiterer Vorteil des erfindungsgemäßen Dosiersystems ist darin zu sehen, dass es aufgrund der Luftunterstützung beim Eindüsen des flüssigen Mediums eine gute und homogene Verteilung des einzudüsenden flüssigen Mediums bei gleichzeitig kleinen Tropfendurchmessern erlaubt.

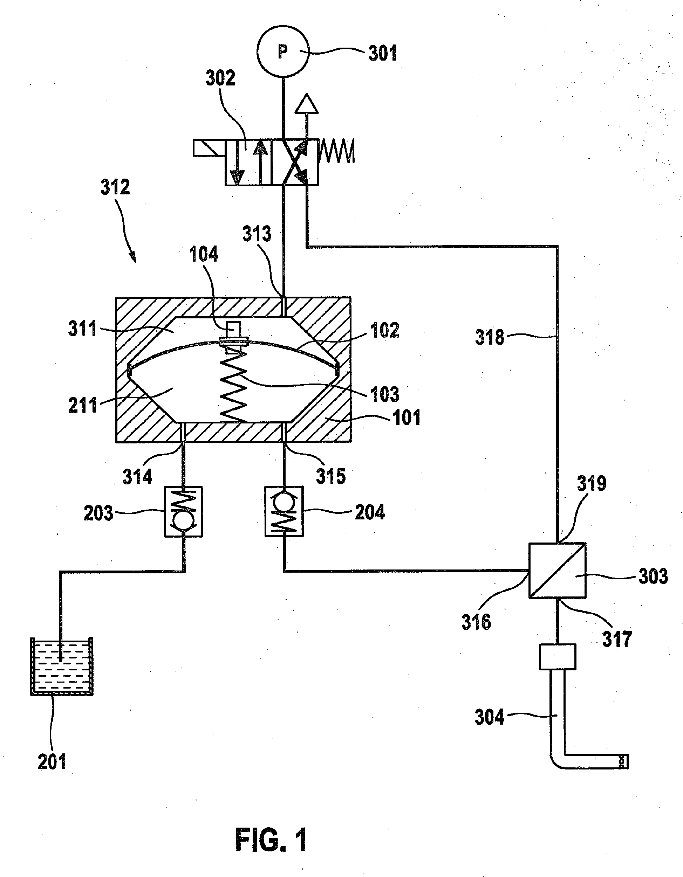

Bei dem erfindungsgemäßen Dosiersystem ist eine Förderseite der Membranpumpe mit einem zweiten Eingang des Phasenmischers mit der Druckluftversorgung verbunden. Weiter ist es erfindungsgemäß vorgesehen, dass eine Saugseite der Membranpumpe mit einem Tank verbunden ist. Auf der Saugseite und/oder der Förderseite der Membranpumpe ist jeweils ein Rückschlagventil vorgesehen. Die Vorteile dieser erfindungsgemäßen Verschaltung der Baugruppen des Dosiersystems werden nachfolgend im Zusammenhang mit der Figur 1 näher erläutert.

Die erfindungsgemäße Membranpumpe weist ein Gehäuse mit einem Innenraum auf, der durch eine bewegliche Membran in eine erste Kammer und eine zweite Kammer unterteilt wird. Dabei weist die erste Kammer einen Eingang auf und die zweite Kammer sowohl einen Eingang als auch einen Ausgang auf.

Durch diese Anordnung von Eingängen und Ausgängen ist die Membranpumpe nach Anspruch 6 in das erfindungsgemäße Dosiersystem integrierbar.

In vorteilhafter Ausgestaltung der Erfindung ist vorgesehen, dass das 4/2-Wegeventil im stromlosen Zustand die erste Schaltstellung einnimmt. Dadurch wird verhindert, dass die Membranpumpe bei Ausfall des Bordnetzes unkontrolliert Harnstoff-Wasser-Lösung in den Abgastrakt fördert. Außerdem wird dadurch verhindert, dass Druckluft ungenutzt in den Abgastrakt strömt, weil die Druckluftversorgung mit der ersten Kammer der Membranpumpe verbunden ist und somit nur eine sehr kleine Menge Druckluft in die erste Kammer der Membranpumpe strömen kann. Sobald sich ein Druckgleichgewicht zwischen der Druckluftversorgung und dem in der ersten Kammer der Membranpumpe herrschenden Druck eingestellt hat, strömt keine weitere Druckluft von der Druckluftversorgung in die Membranpumpe.

Da das erfindungsgemäße Dosiersystem bevorzugt zur Förderung von Harnstoff-Wasser-Lösung vorgesehen ist, ist zu gewährleisten, dass alle mit dem von der Förderpumpe geförderten flüssigen Medium in Berührung kommenden Bauteile beständig gegen Harnstoff-Wasser-Lösung sind.

Die eingangs genannte Aufgabe wird ebenfalls gelöst durch ein Verfahren zum Betreiben eines Dosiersystems für ein flüssiges Medium, umfassend eine druckluftbetätigte Membranpumpe, ein 4/2-Wegeventil und einen Phasenmischer, wobei das 4/2-Wegeventil in einer ersten Schaltstellung eine erste Kammer der Membranpumpe mit einer Druckluftversorgung verbindet und in einer zweiten Schaltstellung einen ersten Eingang des Phasenmischers mit der Druckluftversorgung verbindet, dadurch gelöst, dass das 4/2-Wegeventil so angesteuert wird, dass es abwechselnd die erste Schaltstellung und die zweite Schaltstellung einnimmt.

Immer dann, wenn das 4/2-Wegeventil die erste Schaltstellung einnimmt, dann steigt der Druck in der ersten Kammer der Membranpumpe an. Da in der ersten Kammer und der zweiten Kammer der gleiche Druck herrscht, steigt dadurch der Druck in der zweiten Kammer, die mit dem flüssigen Medium gefüllt ist, an.

Infolgedessen fördert die Membranpumpe über den Ausgang der zweiten Kammer eine vorgegebene Menge des flüssigen Mediums in den Phasenmischer.

Wenn nun das 4/2-Wegeventil die zweite Schaltstellung einnimmt, dann wird der erste Eingang des Phasenmischers mit der Druckluftversorgung verbunden und es strömt Druckluft durch den Phasenmischer in den Abgastrakt. Dabei vermischen sich das zuvor von der Membranpumpe in den Phasenmischer geförderte flüssige Medium und die Druckluft zu einem Aerosol mit einer Vielzahl von kleinsten Tröpfchen des flüssigen Mediums. Dieses Aerosol wird über den Ausgang des Phasenmischers in das Sprührohr gefördert und wird durch das Sprührohr in den Abgasstrang einer Brennkraftmaschine eingedüst.

Dies bedeutet, dass Druckluft von der Druckluftversorgung durch den Phasenmischer in das Sprührohr strömt, solange das 4/2-Wegeventil die zweite Schaltstellung einnimmt. Sobald das 4/2-Wegeventil wieder die erste Schaltstellung einnimmt, strömt keine Druckluft mehr durch das Sprührohr in den Abgasstrang, es wird vielmehr ein erneuter Förderhub der Membranpumpe ausgeführt.

Das erfindungsgemäße Dosiersystem ermöglicht es auf sehr elegante Weise, die Fördermenge des Dosiermoduls zu steuern, indem das Verhältnis der Zeiten, in denen das 4/2-Wegeventil die erste Schaltstellung und die Zeiten, in denen das 4/2-Wegeventil die zweite Schaltstellung einnimmt, geändert wird. Dies kann, ähnlich einer Pulsweitenmodulation, auf einfachste Weise und sehr genau durch ein geeignetes Steuergerät erfolgen.

Es zeigen:
- Figur 1: den schematischen Aufbau eines erfindungsgemäßen Dosiersystems;
- Figur1 und 2: die Ansteuerung eines erfindungsgemäßen Dosiersystems; und
- Figur 4: die Einbindung Aufbau eines erfindungsgemäßen Dosiersystems in eine Abgasanlage einer Brennkraftmaschine.

In Figur 1 ist ein Ausführungsbeispiel eines erfindungsgemäßen Dosiersystems umfassend eine Druckluftversorgung 301, ein 4/2-Wegeventil 302, eine Membranpumpe 312, einen Tank 201, einen Phasenmischer 303 und ein Sprührohr 304 schematisch dargestellt.

Die erfindungsgemäße Membranpumpe 312 hat ein Gehäuse 101 mit einem Innenraum. Dieser Innenraum wird durch eine Membran 102 in eine erste Kammer 311 und eine zweite Kammer 211 unterteilt. In der zweiten Kammer 211 ist eine Druckfeder 103 angeordnet, die sich einenends gegen das Gehäuse 101 und anderenends gegen die Membran 102 abstützt. Diese Druckfeder 103 übt somit auf die Membran 102 eine Kraft aus, die das Volumen der ersten Kammer 311 verkleinern möchte.

Die erste Kammer 311 hat einen Eingang 313.

Der Phasenmischer 303 hat einen ersten Eingang 319, einen zweiten Eingang 316 und einen Ausgang 317.

Die zweite Kammer 211 hat einen Eingang 314 und einen Ausgang 315. Über eine Saugleitung (ohne Bezugszeichen) ist der Tank 201 mit dem Eingang 314 der zweiten Kammer 211 verbunden. In der Saugleitung ist ein Rückschlagventil 203 angeordnet.

Der Ausgang 315 der zweiten Kammer 211 ist über eine Förderleitung (ohne Bezugszeichen) mit einem zweiten Eingang 316 des Phasenmischers 303 verbunden. Auch in der Förderleitung ist ein Rückschlagventil 204 vorgesehen.

An dem Ausgang 317 des Phasenmischers ist das Sprührohr 304 angeschlossen.

In Figur 1 ist das erfindungsgemäße Dosiersystem so dargestellt, dass das 4/2-Wegeventil 302 die zweite Schaltstellung einnimmt. Dies bedeutet, dass die Druckluftversorgung 301 über eine Druckluftleitung 318 mit dem ersten Eingang 319 des Phasenmischers 303 verbunden ist.

In dem Phasenmischer 303 befindet sich eine zuvor geförderte Menge flüssiger Harnstoff-Wasser-Lösung. Diese Harnstoff-Wasser-Lösung wird durch die einströmende Druckluft zu einem Aerosol zerstäubt und anschließend über das Sprührohr 304 in den Abgasstrang einer Brennkraftmaschine eingedüst.

Wenn das 4/2-Wegeventil die in Figur 1 nicht dargestellte erste Schaltstellung einnimmt, dann wird die erste Kammer 311 der Membranpumpe 312 mit der Druckluftversorgung 301 verbunden. Infolgedessen steigt der Druck in der ersten Kammer 311 und die Membran 102 wird entgegen der Kraft der Druckfeder 103 in Figur 1 nach unten gedrückt. Dadurch verringert sich das Volumen der zweiten Kammer 211. Die zweite Kammer 211 ist mit flüssiger Harnstoff-Wasser-Lösung gefüllt.

Wenn sich das Volumen der zweiten Kammer 211 verringert strömt die flüssige Harnstoff-Wasser-Lösung über den Ausgang 315 in den Phasenmischer 303. Das Rückschlagventile 203 verhindert ein Rückströmen der flüssigen Harnstoff-Wasser-Lösung in den Tank 201.

Sobald sich in der Membranpumpe 312 ein Kräftegleichgewicht zwischen den hydraulischen Kräften, die von der ersten Kammer 311 und der zweiten Kammer 211 auf die Membran 102 ausgeübt werden, und der von der Druckfeder 103 auf die Membran ausgeübten Kraft eingestellt hat, bewegt sich die Membran 102 nicht mehr und die Förderung des flüssigen Mediums/der flüssigen Harnstoff-Wasser-Lösung endet.

Dies bedeutet, dass die erfindungsgemäße druckluftbetätigte Membranpumpe 312 mit jedem Förderhub, der durch die erste Schaltstellung des Membranventils initiiert wird, eine definierte Menge flüssiger Harnstoff-Wasser-Lösung in den Phasenmischer 303 fördert.

Weil sowohl in der Membranpumpe 213 als auch im Phasenmischer 303 immer luftgefüllte Bereiche, wie zum Beispiel die erste Kammer 311, vorhanden sind, nimmt das erfindungsgemäße system keinen schaden, wenn die Harnstoff-Wasser-Lösung einfriert.

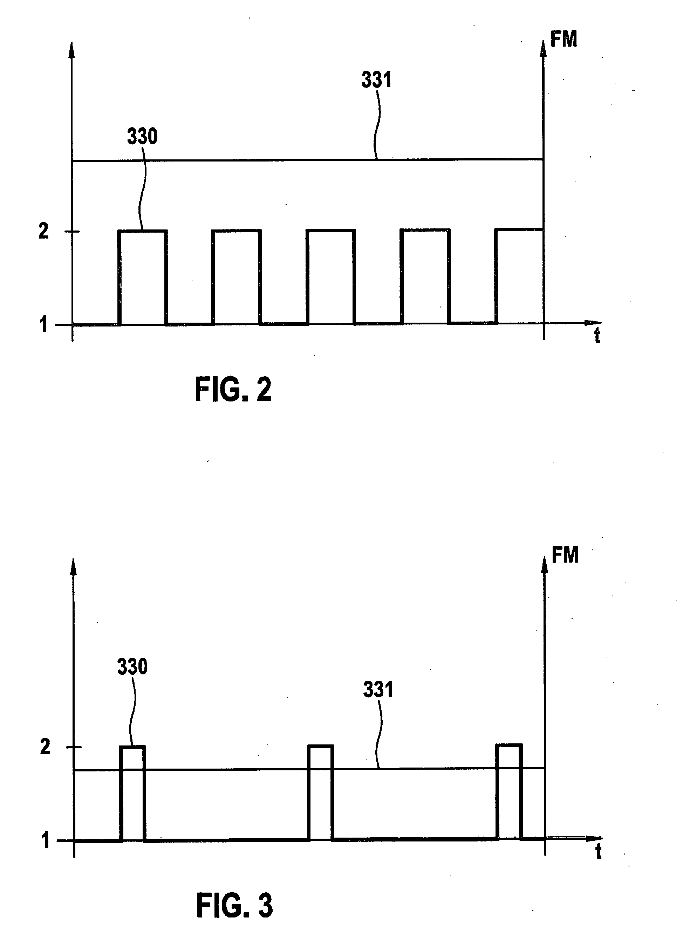

Anhand der Figuren 2 und 3 wird erläutert, wie durch die Variation des Verhältnisses der Zeiten, in denen das 4/2-Wegeventil die erste und die zweite Schaltstellung einnimmt, die zeitlich gemittelte Fördermenge FM des erfindungsgemäßen Dosiersystems gesteuert werden kann.

In der Figur 2 ist ein Diagramm dargestellt, an dessen linker Y-Achse die Schaltstellungen 1 und 2 des 4/2-Wegeventils 302 dargestellt sind. Eine erste Linie 330 zeigt den Wechsel der Schaltstellungen an. Bei dem in Figur 2 dargestellten Beispiel sind die Zeitdauern in denen das 4/2-Wegeventil die erste Schaltstellung und die zweite Schaltstellung einnimmt gleich lang. Daraus resultiert eine zeitlich gemittelte Fördermenge FM, die in Figur 2 durch eine zweite Linie 331 angedeutet ist.

Von der Figur 2 unterscheidet sich die Figur 3 dadurch, dass das 4/2-Wegeventil 75% der Gesamtzeit die Schaltstellung 1 einnimmt und die verbleibenden 25% der Gesamtdauer die Schaltstellung 2 einnimmt. Dies bedeutet, dass erstens die Zahl der Förderhübe gegenüber der Figur 2 halbiert wurde. Außerdem ist die Zeitdauer eines Förderhubs gegenüber der Darstellung in Figur 2 reduziert. Beide Effekte führen gemeinsam dazu, dass die Fördermenge FM im Vergleich zu der Figur 2 deutlich reduziert ist. Dies ergibt sich durch den Vergleich der Linien 331 in den Figuren 2 und 3.

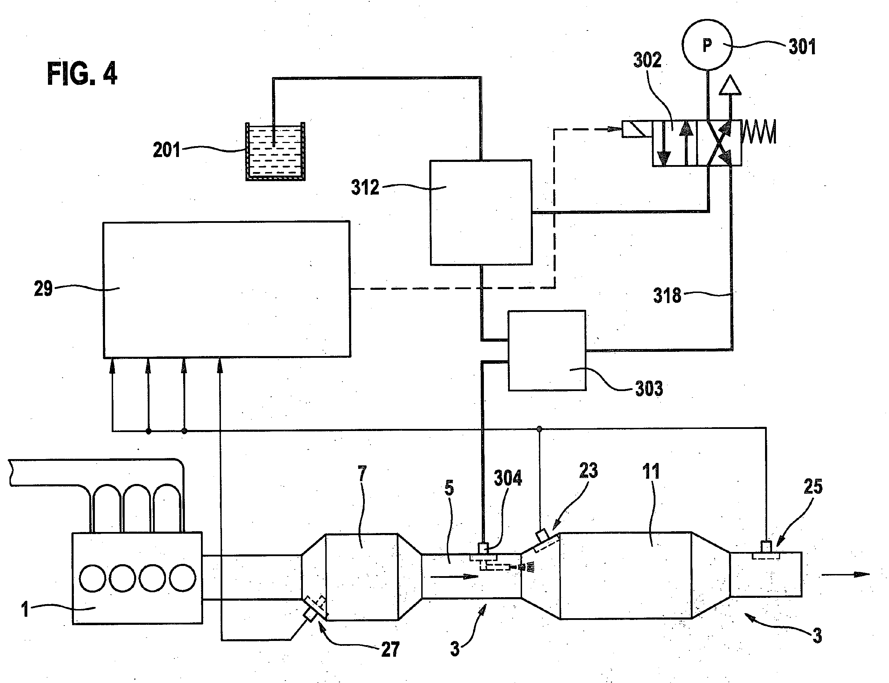

In Figur 4 ist eine Brennkraftmaschine 1 mit einer Abgasnachbehandlungseinrichtung 3 stark vereinfacht und schematisch dargestellt. Die Abgasnachbehandlungseinrichtung 3 umfasst ein Abgasrohr 5, einen Oxidationskatalysator 7 und einen SCR-Katalysator 11. Nicht dargestellt ist ein Partikelfilter, der üblicherweise stromabwärts des Oxidationskatalysators 7 angeordnet wird. Die Strömungsrichtung des Abgases durch das Abgasrohr 5 ist durch Pfeile (ohne Bezugszeichen) angedeutet.

Um den SCR-Katalysator 11 mit Reduktionsmittel zu versorgen, ist stromaufwärts des SCR-Katalysators 11 am Abgasrohr 5 das Sprührohr 304 angeordnet.

Der Vollständigkeit halber sei noch auf die in der Abgasanlage angeordneten Sensoren, nämlich einen NOX-Sensor 25, sowie Temperatur-Sensoren 23 und 27 hingewiesen. Diese Sensoren 23, 25 und 27 sind über Signalleitungen (ohne Bezugszeichen) mit einem Steuergerät 29 der Brennkraftmaschine verbunden. Dieses Steuergerät 29 steuert die Brennkraftmaschine 1 und unter anderem auch die Dosierpumpe 15. Die Signalverbindung zwischen dem Steuergerät 29 und dem 4/2-wegeventil 302 ist in Figur 4 durch einen gestrichelten Pfeil (ohne Bezugszeichen) dargestellt.

## Patentansprüche

1. Dosiersystem für ein flüssiges Medium, insbesondere einem flüssigen Reduktionsmittel, wie zum Beispiel eine wässrige Harnstoff-Wasser-Lösung (HWL), umfassend eine druckluftbetätigte Membranpumpe (312), ein 4/2-Wegeventil (302) und einen Phasenmischer (303), wobei das 4/2-Wegeventil (302) in einer ersten Schaltstellung eine erste Kammer (311) der Membranpumpe (312) mit einer Druckluftversorgung (301) verbindet und in einer zweiten Schaltstellung einen ersten Eingang (319) des Phasenmischers (303) mit der Druckluftversorgung (301) verbindet.

2. Dosiersystem nach Anspruch 1, **dadurch gekennzeichnet, dass** eine Förderseite der Membranpumpe (312) mit einem zweiten Eingang (316) des Phasenmischers (303) verbunden ist.

3. Dosiersystem nach einem der vorhergehenden Ansprüche, **dadurch gekennzeichnet, dass** ein Ausgang (317) des Phasenmischers (303) mit einem Sprührohr (304) verbunden ist.

4. Dosiersystem nach einem der vorhergehenden Ansprüche, **dadurch gekennzeichnet, dass** eine Saugseite der Membranpumpe (312) mit einem Tank (201) verbunden ist.

5. Dosiersystem nach einem der Ansprüche 2 bis 4, **dadurch gekennzeichnet, dass** auf der Saugseite und/oder der Förderseite der Membranpumpe (312) jeweils ein Rückschlagventil (203, 204) vorgesehen ist.

6. Dosiersystem nach einem der vorhergehenden Ansprüche, **dadurch gekennzeichnet, dass** die Membranpumpe (312) ein Gehäuse (101) mit einem Innenraum aufweist, dass der Innenraum des Gehäuses (101) durch eine bewegliche Membran (102) in eine erste Kammer (311) und eine zweite Kammer (211) unterteilt wird, dass die erste Kammer (311) einen Eingang (313) aufweist, dass die zweite Kammer (211) einen Eingang (314) und einen Ausgang (315) aufweist, und dass in der zweiten Kammer (211) eine Druckfeder (103) vorgesehen ist, die sich einenends gegen das Gehäuse (101) und anderenends gegen die Membran (102) abstützt.

7. Dosiersystem nach einem der vorhergehenden Ansprüche, **dadurch gekennzeichnet, dass** das 4/2-Wegeventil (302) in stromlosem Zustand die erste Schaltstellung einnimmt.

8. Dosiersystem nach einem der vorhergehenden Ansprüche, **dadurch gekennzeichnet, dass** alle mit dem von der Membranpumpe (312) geförderten flüssigen Medium in Berührung kommende Bauteile beständig gegen Harnstoff-Wasser-Lösung sind.

9. Verfahren zum Betreiben eines Dosiersystems für ein flüssiges Medium umfassend eine druckluftbetätigte Membranpumpe (312), ein 4/2-Wegeventil (302) und ein Phasenmischer (303), wobei das ein 4/2-Wegeventil (302) in einer ersten Schaltstellung eine erste Kammer (311) der Membranpumpe (312) mit einer Druckluftversorgung verbindet und in einer zweiten Schaltstellung einen ersten Eingang (319) des Phasenmischers (303) mit der Druckluftversorgung (301) verbindet, **dadurch gekennzeichnet, dass** das Wegeventil (302) so angesteuert wird, dass es abwechselnd die erste Schaltstellung und die zweite Schaltstellung einnimmt.

10. Verfahren nach Anspruch 9, **dadurch gekennzeichnet, dass** eine Fördermenge (FM) des Dosiersystems durch das Verhältnis der Zeiten in denen das 4/2-Wegeventil (302) die erste Schaltstellung einnimmt und in denen das 4/2-Wegeventil (302) die zweite Schaltstellung einnimmt gesteuert wird.

11. Steuergerät (29) zum Betreiben eines Dosiersystems für ein flüssiges Medium, **dadurch gekennzeichnet, dass** es nach einem Verfahren nach einem der Ansprüche 9 oder 10 arbeitet.

## Claims

1. Dosing system for a liquid medium, in particular a liquid reducing agent, such as for example an aqueous urea-water solution, the dosing system comprising a compressed air-actuated diaphragm pump (312), a 4/2 directional valve (302) and a phase mixer (303), wherein the 4/2 directional valve (302), in a first switching position, connects a first chamber (311) of the diaphragm pump (312) to a compressed-air supply (301) and, in a second switching position, connects a first inlet (319) of the phase mixer (303) to the compressed-air supply (301).

2. Dosing system according to Claim 1, **characterized in that** a delivery side of the diaphragm pump (312) is connected to a second inlet (316) of the phase mixer (303).

3. Dosing system according to one of the preceding claims, **characterized in that** an outlet (317) of the phase mixer (303) is connected to a spray pipe (304) .

4. Dosing system according to one of the preceding claims, **characterized in that** a suction side of the diaphragm pump (312) is connected to a tank (201) .

5. Dosing system according to one of Claims 2 to 4, **characterized in that** in each case one check valve (203, 204) is provided on the suction side and/or on the delivery side of the diaphragm pump (312).

6. Dosing system according to one of the preceding claims, **characterized in that** the diaphragm pump (312) has a housing (101) with an interior, **in that** the interior of the housing (101) is divided into a first chamber (311) and a second chamber (211) by a movable diaphragm (102), **in that** the first chamber (311) has an inlet (313), **in that** the second chamber (211) has an inlet (314) and an outlet (315), and **in that**, in the second chamber (211), there is provided a compression spring (103) which is supported at one end against the housing (101) and at the other end against the diaphragm (102).

7. Dosing system according to one of the preceding claims, **characterized in that** the 4/2 directional valve (302) assumes the first switching position in the deenergized state.

8. Dosing system according to one of the preceding claims, **characterized in that** all of the components that come into contact with the liquid medium delivered by the diaphragm pump (312) are resistant to urea-water solution.

9. Method for operating a dosing system for a liquid medium, the dosing system comprising a compressed air-actuated diaphragm pump (312), a 4/2 directional valve (302) and a phase mixer (303), wherein the 4/2 directional valve (302), in a first switching position, connects a first chamber (311) of the diaphragm pump (312) to a compressed-air supply and, in a second switching position, connects a first inlet (319) of the phase mixer (303) to the compressed-air supply (301), **characterized in that** the directional valve (302) is actuated so as to alternately assume the first switching position and the second switching position.

10. Method according to Claim 9, **characterized in that** a delivery rate (FM) of the dosing system is controlled by way of the ratio of the times in which the 4/2 directional valve (302) assumes the first switching position and the times in which the 4/2 directional valve (302) assumes the second switching position.

11. Control unit (29) for operating a dosing system for a liquid medium, **characterized in that** said control unit operates in accordance with a method according to either of Claims 9 and 10.

## Revendications

1. Système de dosage pour un milieu liquide, en particulier un agent de réduction liquide, comme par exemple une solution aqueuse urée-eau (HWL), comportant une pompe à membrane pneumatique (312), un distributeur à 4/2 voies (302) et un mélangeur de phases (303), le distributeur à 4/2 voies (302) reliant, dans une première position de commutation, une première chambre (311) de la pompe à membrane (312) à une alimentation en air comprimé (301) et reliant, dans une deuxième position de commutation, une première entrée (319) du mélangeur de phases (303) à l'alimentation en air comprimé (301) .

2. Système de dosage selon la revendication 1, **caractérisé en ce qu'**un côté refoulement de la pompe à membrane (312) est relié à une deuxième entrée (316) du mélangeur de phases (303).

3. Système de dosage selon l'une quelconque des revendications précédentes, **caractérisé en ce qu'**une sortie (317) du mélangeur de phases (303) est reliée à un tuyau de purge (304).

4. Système de dosage selon l'une quelconque des revendications précédentes, **caractérisé en ce qu'**un côté aspiration de la pompe à membrane (312) est relié à un réservoir (201).

5. Système de dosage selon l'une quelconque des revendications 2 à 4, **caractérisé en ce qu'**une soupape anti-retour (203, 204) est prévue à chaque fois sur le côté aspiration et/ou le côté refoulement de la pompe à membrane (312).

6. Système de dosage selon l'une quelconque des revendications précédentes, **caractérisé en ce que** la pompe à membrane (312) comprend un boîtier (101) pourvu d'un espace intérieur, **en ce que** l'espace intérieur du boîtier (101) est divisé par une membrane mobile (102) en une première chambre (311) et une deuxième chambre (211), **en ce que** la première chambre (311) comprend une entrée (313), **en ce que** la deuxième chambre (211) comprend une entrée (314) et une sortie (315), et **en ce qu'**un ressort de compression (103) est prévu dans la deuxième chambre (211), lequel ressort de compression s'appuie à une extrémité contre le boîtier (101) et à l'autre extrémité contre la membrane (102).

7. Système de dosage selon l'une quelconque des revendications précédentes, **caractérisé en ce que** le distributeur à 4/2 voies (302) adopte la première position de commutation à l'état non alimenté en courant.

8. Système de dosage selon l'une quelconque des revendications précédentes, **caractérisé en ce que** tous les composants venant en contact avec le milieu liquide refoulé par la pompe à membrane (312) sont résistants vis-à-vis de la solution urée-eau.

9. Procédé de fonctionnement d'un système de dosage pour un milieu liquide comportant une pompe à membrane pneumatique (312), un distributeur à 4/2 voies (302) et un mélangeur de phases (303), le distributeur à 4/2 voies (302) reliant, dans une première position de commutation, une première chambre (311) de la pompe à membrane (312) à une alimentation en air comprimé et reliant, dans une deuxième position de commutation, une première entrée (319) du mélangeur de phases (303) à l'alimentation en air comprimé (301), **caractérisé en ce que** le distributeur (302) est commandé de telle sorte qu'il adopte en alternance la première position de commutation et la deuxième position de commutation.

10. Procédé selon la revendication 9, **caractérisé en ce qu'**un débit de refoulement (FM) du système de dosage est commandé par le rapport des durées pendant lesquelles le distributeur à 4/2 voies (302) adopte la première position de commutation et pendant lesquelles le distributeur à 4/2 voies (302) adopte la deuxième position de commutation.

11. Appareil de commande (29) pour le fonctionnement d'un système de dosage pour un milieu liquide, **caractérisé en ce qu'**il fonctionne selon un procédé selon l'une des revendications 9 ou 10.
